# EUROPEAN PATENT APPLICATION

(11) **EP 4 776 659 A1**
(43) Date of publication of application: **15.07.2026**
(21) Application number: 25227192.9
(22) Date of filing: 24.12.2025
(51) Int. Cl.: H04W 4/02, G01S 5/02, G01S 5/18

(54) **SYSTEMS, APPARATUSES, METHODS, AND COMPUTER PROGRAM PRODUCTS FOR INITIATING PERFORMANCE OF ONE OR MORE LOCATION RELATED RESPONSIVE ACTIONS**

(30) Priority: 10.01.2025 US 202563744002 P; 02.12.2025 US 202519406224
(71) Applicant: Hand Held Products, Inc., Charlotte, NC 28202 (US)
(72) Inventor: TODESCHINI, Erik, Charlotte, 28202 (US)
(74) Representative: Haseltine Lake Kempner LLP

(57) **Abstract**

A method provided herein includes identifying, by a first computing device, a location recognition trigger. In some embodiments, the method includes, in response to identifying the location recognition trigger, capturing one or more location indicative features using one or more sensors of the first computing device. In some embodiments, the one or more location indicative features comprise an image based location indicative feature, an audio based location indicative feature, and a device based location indicative feature corresponding to a second computing device. In some embodiments, the method includes generating, using at least one of the one or more location indicative features and a location determination model, a location recognition result. In some embodiments, the method includes initiating performance of one or more location related responsive actions based on the location recognition result.

## Description

### CROSS-REFERENCE TO RELATED APPLICATIONS

This application claims the benefit of U.S. Provisional Patent Application No. 63/744,002, filed January 10, 2025, the entire contents of which are incorporated by reference herein.

### TECHNOLOGICAL FIELD

Embodiments of the present disclosure relate generally to systems, apparatuses, methods, and computer program products for initiating performance of one or more location related responsive actions.

### BACKGROUND

Applicant has identified many technical challenges and difficulties associated with systems, apparatuses, methods, and computer program products for determining computing device location in an asset. Through applied effort, ingenuity, and innovation, Applicant has solved problems related to systems, apparatuses, methods, and computer program products for determining computing device location in an asset by developing solutions embodied in the present disclosure, which are described in detail below.

### BRIEF SUMMARY

Various embodiments described herein relate to systems, apparatuses, methods, and computer program products for initiating performance of one or more location related responsive actions.

In accordance with one aspect of the disclosure, a method is provided. In some embodiments, the method includes identifying by a first computing device, a location recognition trigger. In some embodiments, the method includes, in response to identifying the location recognition trigger, capturing one or more location indicative features using one or more sensors of the first computing device. In some embodiments, the one or more location indicative features comprise an image based location indicative feature, an audio based location indicative feature, and a device based location indicative feature corresponding to a second computing device. In some embodiments, the method includes generating, using at least one of the one or more location indicative features and a location determination model, a location recognition result. In some embodiments, the method includes initiating performance of one or more location related responsive actions based on the location recognition result.

In some embodiments, identifying the location recognition trigger comprises detecting a motion event associated with the first computing device.

In some embodiments, identifying the location recognition trigger comprises receiving the location recognition trigger from a third computing device.

In some embodiments, the second computing device is less than a predefined distance from the first computing device.

In some embodiments, the predefined distance is based on a Bluetooth range associated with the first computing device.

In some embodiments, the first computing device and the second computing device are located in an asset. In some embodiments, the first computing device is connected to a Wi-Fi network of the asset.

In some embodiments, the method includes causing actuation of one or more lighting components of the first computing device based on the location recognition trigger.

In some embodiments, causing actuation of the one or more lighting components based on the location recognition trigger occurs before the capturing of the one or more location indicative features.

In some embodiments, the method includes causing actuation of one or more audio components of the first computing device based on the location recognition trigger.

In some embodiments, causing actuation of the one or more audio components based on the location recognition trigger occurs before the capturing of the one or more location indicative features.

In some embodiments, the method includes in response to identifying the location recognition trigger, determining an orientation of the first computing device.

In some embodiments, the method includes in response identifying the location recognition trigger, determining a charge status of the first computing device.

In some embodiments, initiating performance of the one or more location related responsive actions comprises generating a location recognition result interface component.

In some embodiments, the location recognition result interface component comprises a location recognition result representation corresponding to the location recognition result.

In some embodiments, initiating performance of the one or more location related responsive actions comprises causing the location recognition result interface component to be rendered to an interface.

In some embodiments, initiating performance of the one or more location related responsive actions comprises transmitting the location recognition result to a third computing device.

In some embodiments, initiating performance of the one or more location related responsive actions comprises causing actuation of one or more lighting components of the first computing device based on the location recognition result.

In some embodiments, initiating performance of the one or more location related responsive actions comprises causing actuation of one or more audio components of the first computing device based on the location recognition result.

In some embodiments, initiating performance of the one or more location related responsive actions comprises generating, using asset mapping data and the location recognition result, an asset location map. In some embodiments, the asset location map comprises a representation of a location of the first computing device within an asset corresponding to the asset mapping data.

In accordance with another aspect of the disclosure, an apparatus is provided. In some embodiments, the apparatus includes memory and one or more processors communicatively coupled to the memory. In some embodiments, the one or more processors configured to perform operations comprising identifying by a first computing device, a location recognition trigger. In some embodiments, the one or more processors configured to perform operations comprising, in response to identifying the location recognition trigger, capturing one or more location indicative features using one or more sensors of the first computing device. In some embodiments, the one or more location indicative features comprise an image based location indicative feature, an audio based location indicative feature, and a device based location indicative feature corresponding to a second computing device. In some embodiments, the one or more processors configured to perform operations comprising generating, using at least one of the one or more location indicative features and a location determination model, a location recognition result. In some embodiments, the one or more processors configured to perform operations comprising initiating performance of one or more location related responsive actions based on the location recognition result.

In some embodiments, identifying the location recognition trigger comprises detecting a motion event associated with the first computing device.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for identifying by a first computing device, a location recognition trigger. In some embodiments, the computer program code, in execution with at least one processor, configures the computer program product for, in response to identifying the location recognition trigger, capturing one or more location indicative features using one or more sensors of the first computing device. In some embodiments, the one or more location indicative features comprise an image based location indicative feature, an audio based location indicative feature, and a device based location indicative feature corresponding to a second computing device. In some embodiments, the computer program code, in execution with at least one processor, configures the computer program product for generating, using at least one of the one or more location indicative features and a location determination model, a location recognition result. In some embodiments, the computer program code, in execution with at least one processor, configures the computer program product for initiating performance of one or more location related responsive actions based on the location recognition result.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example diagram of an environment in which embodiments of the present disclosure may operate;
FIG. 2 illustrates an example block diagram of an example apparatus that may be specially configured in accordance with an example embodiment of the present disclosure;
FIG. 3 illustrates an example interface in accordance with one or more embodiments of the present disclosure;
FIG. 4 illustrates a flowchart of an example method in accordance with one or more embodiments of the present disclosure; and
FIG. 5 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with determining computing device location in an asset. As would be understood by one skilled in the field to which this disclosure pertains, there are numerous example scenarios in which determining computing device location in an asset is desirable. In this regard, in many applications, it may be desirable to use systems, apparatuses, methods, and computer program products for initiating performance of one or more location related responsive actions. For example, it may be desirable to use systems, apparatuses, methods, and computer program products for initiating performance of one or more location related responsive actions in order to determine the location of a computing device in an asset.

Example solutions for determining computing device location include using computing devices and to determine a computing device location. However, such example solutions are, inefficient, simplistic, and technically deficient. For example, such example solutions are inefficient because such example solutions require extensive infrastructure, such as beacons, global positioning systems (GPS), complex sensor networks, and/or corresponding software, to be built for an asset in order to be able to determine a computing device location in an asset. Further, this extensive infrastructure requires frequent maintenance and updating, which decreases the efficiency of such example solutions even more. As another example, such example solutions are simplistic because such example solutions are unable to automatically implement location related responsive actions based on a generated location recognition result. As another example, such example solutions are technically deficient because such example solutions are unable to implement a specifically configured location determination model in order to determine a computing device location. As a result, such example solutions cause the computing devices and databases used to determine computing device location to suffer from high latency, consume excessive processing power, and consume excessive memory. Accordingly, there is a need for systems, apparatuses, methods, and computer program products that are able to determine computing device location in an efficient, a sophisticated, and a technically sufficient manner.

Thus, to address these and/or other issues related to such example solutions, example systems, apparatuses, methods, and computer program products for initiating performance of one or more location related responsive actions are disclosed herein. For example, an embodiment in this disclosure, described in greater detail below, includes a method that includes identifying by a first computing device, a location recognition trigger. In some embodiments, the method includes, in response to identifying the location recognition trigger, capturing one or more location indicative features using one or more sensors of the first computing device. In some embodiments, the one or more location indicative features comprise an image based location indicative feature, an audio based location indicative feature, and a device based location indicative feature corresponding to a second computing device. In some embodiments, the method includes generating, using at least one of the one or more location indicative features and a location determination model, a location recognition result. In some embodiments, the method includes initiating performance of one or more location related responsive actions based on the location recognition result. Accordingly, the systems, apparatuses, methods, and computer program products provided herein enable initiating performance of one or more location related responsive actions in an efficient, a sophisticated, and a technically sufficient manner.

### Example Systems and Apparatuses

Embodiments of the present disclosure herein include systems, apparatuses, methods, and computer program products configured for initiating performance of one or more location related responsive actions. It should be readily appreciated that the embodiments of the apparatus, systems, methods, and computer program product described herein may be configured in various additional and alternative manners in addition to those expressly described herein.

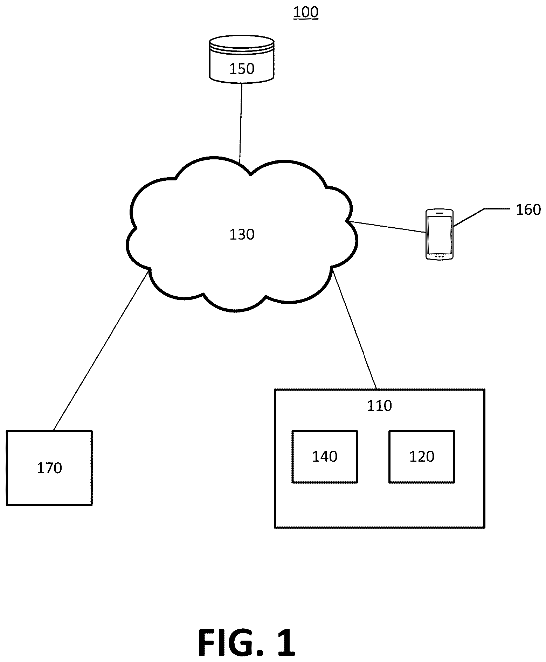

FIG. 1 illustrates an exemplary block diagram of an environment 100 in which embodiments of the present disclosure may operate. In some embodiments, the environment 100 comprises an asset 110. In some embodiments, the asset 110 is any type of building associated with a computing device associated with the environment 100. For example, the asset 110 may be one or more of a packaging center, a distribution center, a plant, a warehouse, an office building, a house, an industrial building, and/or the like.

In some embodiments, the environment 100 includes a first computing device 140. In some embodiments, the first computing device 140 is electronically and/or communicatively coupled to a third computing device 170, a second computing device 120, a database 150, and/or a user device 160. The first computing device 140 may be located remotely from the third computing device 170, the second computing device 120, the second computing device 120, the database 150, and/or the user device 160. In some embodiments, the first computing device 140 may be located in a remote cloud server and electronically and/or communicatively coupled to the third computing device 170, the second computing device 120, the database 150, and/or the user device 160. Additionally, or alternatively, the first computing device 140 is an edge device and electronically and/or communicatively coupled to the third computing device 170, the second computing device 120, the database 150, and/or the user device 160. Additionally, or alternatively, the first computing device 140 may be located at the same location as third computing device 170, the second computing device 120, the database 150, and/or the user device 160 and electronically and/or communicatively coupled to the third computing device 170, the second computing device 120, the database 150, and/or the user device 160 via one or more direct connections (e.g., via a wire). In some embodiments, the first computing device 140 is configured via hardware, software, firmware, and/or a combination thereof, to perform data intake of one or more types of data. In some embodiments, the first computing device 140 is located within the asset 110.

Additionally, or alternatively, in some embodiments, the first computing device 140 is configured via hardware, software, firmware, and/or a combination thereof, to generate and/or transmit command(s) that control, adjust, or otherwise impact operations of the one or more of electronically and/or communicatively coupled to the third computing device 170, the second computing device 120, the database 150, and/or the user device 160. For example, the first computing device 140 may be configured to initiate performance of one or more location related responsive actions. Additionally, or alternatively, in some embodiments, the first computing device 140 is configured via hardware, software, firmware, and/or a combination thereof, to perform data reporting, provide data, and/or other data output process(es) associated with monitoring or otherwise analyzing operations of one or more of the and electronically and/or communicatively coupled to the third computing device 170, the database 150, and/or the user device 160. For example, in various embodiments, the first computing device 140 may be configured to execute and/or perform one or more operations and/or functions described herein.

In some embodiments, the environment 100 includes the second computing device 120. In some embodiments, the second computing device 120 is electronically and/or communicatively coupled to the third computing device 170, the first computing device 140, the database 150, and/or the user device 160. The second computing device 120 may be located remotely from the third computing device 170, the first computing device 140, the second computing device 120, the database 150, and/or the user device 160. In some embodiments, the second computing device 120 may be located in a remote cloud server and electronically and/or communicatively coupled to the third computing device 170, the first computing device 140, the second computing device 120, the database 150, and/or the user device 160. Additionally, or alternatively, the second computing device 120 is an edge device and electronically and/or communicatively coupled to the third computing device 170, the first computing device 140, the database 150, and/or the user device 160. Additionally, or alternatively, the second computing device 120 may be located at the same location as third computing device 170, the first computing device 140, the database 150, and/or the user device 160 and electronically and/or communicatively coupled to the third computing device 170, the first computing device 140, the database 150, and/or the user device 160 via one or more direct connections (e.g., via a wire). In some embodiments, the second computing device 120 is configured via hardware, software, firmware, and/or a combination thereof, to perform data intake of one or more types of data. In some embodiments, the second computing device 120 is located within the asset 110.

Additionally, or alternatively, in some embodiments, the second computing device 120 is configured via hardware, software, firmware, and/or a combination thereof, to generate and/or transmit command(s) that control, adjust, or otherwise impact operations of the one or more of electronically and/or communicatively coupled to the third computing device 170, the first computing device 140, the database 150, and/or the user device 160. For example, the second computing device 120 may be configured to initiate performance of one or more location related responsive actions. Additionally, or alternatively, in some embodiments, the second computing device 120 is configured via hardware, software, firmware, and/or a combination thereof, to perform data reporting, provide data, and/or other data output process(es) associated with monitoring or otherwise analyzing operations of one or more of the and electronically and/or communicatively coupled to the third computing device 170, the first computing device 140, the database 150, and/or the user device 160. For example, in various embodiments, the second computing device 120 may be configured to execute and/or perform one or more operations and/or functions described herein.

In some embodiments, the second computing device 120 is less than a predefined distance from the first computing device 140. For example, the second computing device 120 is less than a predefined distance from the first computing device 140 within the asset 110. In some embodiments, the predefined distance from the second computing device 120 to the first computing device 140 is based on a Bluetooth range associated with the first computing device 140. In this regard, for example, the first computing device 140 and the second computing device 120 may be located in proximity to each other such that the first computing device 140 and the second computing device 120 may communicate using Bluetooth.

In some embodiments, the environment 100 includes the third computing device 170. In some embodiments, the third computing device 170 is electronically and/or communicatively coupled to the second computing device 120, the first computing device 140, the database 150, and/or the user device 160. The third computing device 170 may be located remotely from the third computing device 170, the first computing device 140, the database 150, and/or the user device 160. In some embodiments, the third computing device 170 may be located in a remote cloud server and electronically and/or communicatively coupled to the third computing device 170, the first computing device 140, the second computing device 120, the database 150, and/or the user device 160. Additionally, or alternatively, the third computing device 170 is an edge device and electronically and/or communicatively coupled to the second computing device 120, the first computing device 140, the database 150, and/or the user device 160. Additionally, or alternatively, the third computing device 170 may be located at the same location as second computing device 120, the first computing device 140, the database 150, and/or the user device 160 and electronically and/or communicatively coupled to the second computing device 120, the first computing device 140, the database 150, and/or the user device 160 via one or more direct connections (e.g., via a wire). In some embodiments, the third computing device 170 is configured via hardware, software, firmware, and/or a combination thereof, to perform data intake of one or more types of data. In some embodiments, the third computing device 170 is located within the asset 110 and/or external to the asset 110 (e.g., remote from the asset 110).

Additionally, or alternatively, in some embodiments, the third computing device 170 is configured via hardware, software, firmware, and/or a combination thereof, to generate and/or transmit command(s) that control, adjust, or otherwise impact operations of the one or more of electronically and/or communicatively coupled to the second computing device 120, the first computing device 140, the database 150, and/or the user device 160. For example, the third computing device 170 may be configured to initiate performance of one or more location related responsive actions. Additionally, or alternatively, in some embodiments, the third computing device 170 is configured via hardware, software, firmware, and/or a combination thereof, to perform data reporting, provide data, and/or other data output process(es) associated with monitoring or otherwise analyzing operations of one or more of the and electronically and/or communicatively coupled to the second computing device 120, the first computing device 140, the database 150, and/or the user device 160. For example, in various embodiments, the third computing device 170 may be configured to execute and/or perform one or more operations and/or functions described herein.

In some embodiments, the environment 100 includes the user device 160. The user device 160 may be associated with users of the second computing device 120, the third computing device 170, the first computing device 140, and/or the database 150. In various embodiments, the second computing device 120, the third computing device 170, the first computing device 140, and/or the database 150, may generate and/or transmit a message, alert, or indication to a user via the user device 160. Additionally, or alternatively, the user device 160 may be utilized by a user to remotely access the second computing device 120, the third computing device 170, the first computing device 140, and/or the database 150. This may be by, for example, an application operating on the user device 160.

In some embodiments, the environment 100 includes the database 150. The database 150 may be configured to receive, store, and/or transmit data. In various embodiments, the database 150 may be associated with data associated with the second computing device 120, the third computing device 170, the first computing device 140, and/or the user device 160. Additionally, or alternatively, in some embodiments the database 150 stores user inputted data. The database 150 may be located remotely from the second computing device 120, the third computing device 170, the first computing device 140, and/or the user device 160, in proximity of the second computing device 120, the third computing device 170, the first computing device 140, and/or the user device 160, and/or within the second computing device 120, the third computing device 170, the first computing device 140, and/or the user device 160.

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the first computing device 140 may include the database 150.

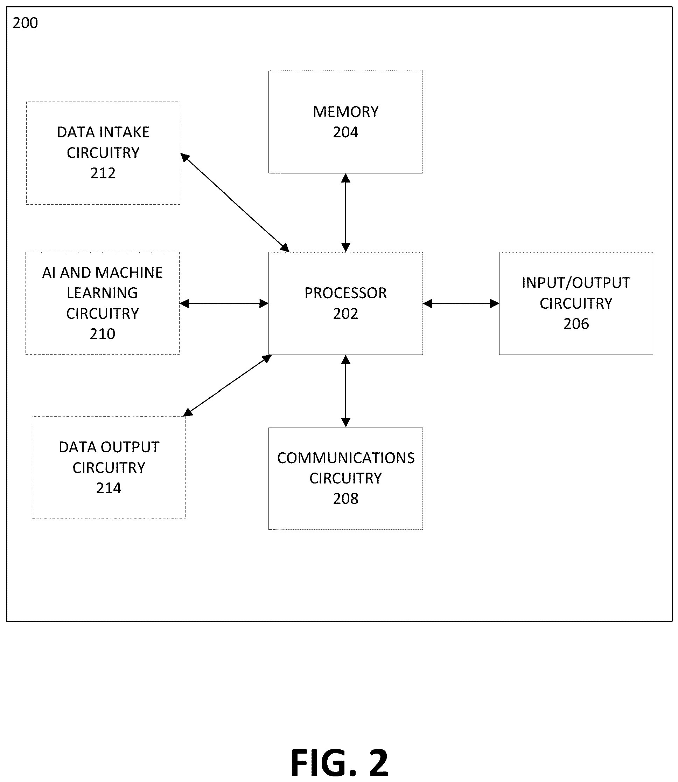

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. Examples of an apparatus 200 may include, but is not limited to, the second computing device 120, the third computing device 170, the first computing device 140, the user device 160, and/or the database 150. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as an computing apparatus 200 of the second computing device 120, the third computing device 170, the first computing device 140, the user device 160, and/or the database 150, may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the second computing device 120, the third computing device 170, the first computing device 140, the user device 160, and/or the database 150. In some embodiments, the data intake circuitry 212 includes hardware, software, firmware, and/or a combination thereof, that communicates with one or more components of the second computing device 120, the third computing device 170, the first computing device 140, the user device 160, and/or the database 150 to receive particular data associated with such operations of the second computing device 120, the third computing device 170, the first computing device 140, the user device 160, and/or the database 150. The data intake circuitry 212 may support such operations for the second computing device 120, the third computing device 170, the first computing device 140, the user device 160, and/or the database 150. Additionally, or alternatively, in some embodiments, the data intake circuitry 212 includes hardware, software, firmware, and/or a combination thereof, that retrieves particular data associated with the second computing device 120, the third computing device 170, the first computing device 140, the user device 160, and/or the database 150.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured to facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect the AI and machine learning circuitry 210.

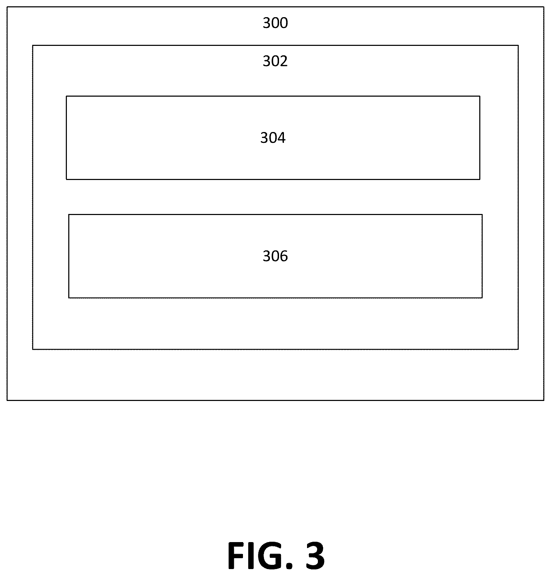

With reference to FIGS. 1-3, in some embodiments, the first computing device 140 is configured to identify a location recognition trigger. In some embodiments, the location recognition trigger is a trigger that causes the first computing device 140 to capture one or more location indicative features. In this regard, in some embodiments, identifying a location recognition trigger comprises the first computing device 140 being configured to receive a location recognition trigger from the third computing device 170, the user device 160, and/or one or more other computing devices. For example, the first computing device 140 may be configured to receive a location recognition trigger from the third computing device 170, the user device 160, and/or one or more other computing devices in a natural language format (e.g., a trigger that states "describe your surroundings"). Additionally, or alternatively, identifying a location recognition trigger comprises the first computing device 140 being configured to determine that the current time is a predefined time in which the first computing device 140 should identify a location recognition trigger in accordance with a location recognition trigger schedule (e.g., the first computing device 140 is configured to periodically identify a location recognition trigger). Additionally, or alternatively, identifying a location recognition trigger comprises the first computing device 140 being configured to determine that a predefined amount of time has elapsed since the first computing device 140 was last accessed (e.g., a predefined amount of time has elapsed since the first computing device 140 was unlocked).

Additionally, or alternatively, identifying a location recognition trigger comprises the first computing device 140 being configured to detect a motion event. In some embodiments, a motion event is an event in which the first computing device 140 detects that the first computing device 140 accelerates at a rate that meets or exceeds an acceleration threshold (e.g., the first computing device 140 accelerates faster than a predefined acceleration rate). In some embodiments, a motion event is an event in which the first computing device 140 moves at a rate of speed that is greater than a speed threshold (e.g., the first computing device 140 travels faster than a predefined speed rate). In some embodiments, a motion event is an event in which the first computing device 140 is moved such that the first computing device 140 is located outside of the asset 110, in a prohibited area of the asset 110 (e.g., in a waste disposal area of the asset 110), and/or the like. In some embodiments, the first computing device 140 is configured to detect a motion event using one or more sensors, such as one or more sensors that comprise a gyroscope, accelerometer, magnetometer, and/or the like.

In some embodiments, the first computing device 140 is configured to capture one or more location indicative features. In some embodiments, a location indicative feature comprises one or more items of data representative and/or indicative of a feature associated with the location of the first computing device 140.

In some embodiments, the one or more location indicative features comprises an image based location indicative feature. In some embodiments, an image based location indicative feature comprises one or more items of data representative and/or indicative of a feature associated with the location of the first computing device 140 as indicated by one or more images captured by the first computing device 140 (e.g., using a camera). In this regard, in some embodiments, an image based location indicative feature may comprise one or more items of data representative and/or indicative of a size of a room in which the first computing device 140 is located as indicated by an image captured by the first computing device 140.

In some embodiments, an image based location indicative feature may comprise one or more items of data representative and/or indicative of a light intensity in a location in which the first computing device 140 is located as indicated by an image captured by the first computing device 140. In this regard, for example, the light intensity may be measured in lumens. In some embodiments, an image based location indicative feature may comprise one or more items of data representative and/or indicative of an object in proximity to a location of the first computing device 140 as indicated by an image captured by the first computing device 140. In this regard, for example, an object may be any item that may be used to identify a location, such as a locker, a whiteboard, a printer, a sign, a conveyor belt, and/or the like (e.g., an object may be located in a known location which may be used as a reference to identify a location of the first computing device 140). In some embodiments, an image based location indicative feature may comprise one or more items of data representative and/or indicative of text located in proximity to a location of the first computing device 140 as indicated by an image captured by the first computing device 140. In this regard, for example, the text may be any text that may be used to identify a location (e.g., text that states "this is Operations Area A").

In some embodiments, the one or more location indicative features comprises an audio based location indicative feature. In some embodiments, an audio based location indicative feature comprises one or more items of data representative and/or indicative of a feature associated with the location of the first computing device 140 as indicated by audio captured by the first computing device 140 (e.g., using a microphone). In this regard, for example, an audio based location indicative feature may comprise one or more items of data representative and/or indicative of a size of a room in which the first computing device 140 is located as indicated by audio captured by the first computing device 140. In this regard, for example, the first computing device 140 may be configured to determine a size of a room in which the first computing device 140 is located by determining the amount of time it takes for audio emitted by the first computing device 140 (e.g., using a speaker) to be reflected back to the first computing device 140 (e.g., when a microphone captures the reflected back audio).

In some embodiments, an audio based location indicative feature may comprise one or more items of data representative and/or indicative of a noise level in a location in which the first computing device 140 is located as indicated by audio captured by the first computing device 140. In some embodiments, the noise level is be measured in decibels. In some embodiments, an audio based location indicative feature may comprise one or more items of data representative and/or indicative of an object in proximity to a location of the first computing device 140 as indicated by audio captured by the first computing device 140. In this regard, for example, the first computing device 140 may be configured to compare captured audio indicative of sounds made by known objects (e.g., compare captured audio with the known sounds, such as sounds made by a printer, a conveyor belt, individuals, and/or the like).

In some embodiments, an audio based location indicative feature may comprise one or more items of data representative and/or indicative of a number of audio sources in a location in which the first computing device 140 is located as indicated by audio captured by the first computing device 140. In this regard, for example, the first computing device 140 may be configured to determine the number of audio sources in a location in which the first computing device 140 is located by determining a number of different sounds (e.g., sounds that are differentiated by different frequencies, amplitudes, cadences, etc.) in a location in which the first computing device 140 is located.

In some embodiments, the one or more location indicative features comprises a device based location indicative feature. In some embodiments, a device based location indicative feature corresponds to the second computing device 120. In some embodiments, a device based location indicative feature comprises one or more items of data representative and/or indicative of a feature associated with the location of the first computing device 140 as indicated by information associated with the second computing device 120 that is captured by the first computing device 140 (e.g., using a connection detector). In this regard, in some embodiments, a device based location indicative feature may comprise one or more items of data representative and/or indicative of a name of the second computing device 120 (e.g., person A's computing device).

In some embodiments, a device based location indicative feature may comprise one or more items of data representative and/or indicative of a type of the second computing device 120 (e.g., the second computing device 120 is a smartphone). In some embodiments, a device based location indicative feature may comprise one or more items of data representative and/or indicative of a distance to the second computing device 120 from the first computing device 140 (e.g., the second computing device 120 is twenty feet away from the first computing device 140). In some embodiments, a device based location indicative feature may comprise one or more items of data representative and/or indicative of a Wi-Fi network that the second computing device 120 is connected to. In this regard, for example, the first computing device 140 may be configured to determine if the first computing device 140 is connected to the same Wi-Fi network as the second computing device 120, such as a Wi-Fi network of the asset 110.

In some embodiments, the first computing device 140 is configured to capture one or more location indicative features using one or more sensors. For example, the first computing device 140 is configured to capture one or more location indicative features using one or more sensors of the first computing device 140 (e.g., onboard sensors of the first computing device 140). In some embodiments, the one or more sensors comprises a camera. In this regard, in some embodiments, the first computing device 140 is configured to capture one or more location indicative features using a camera. Additionally, or alternatively, the one or more sensors comprises a microphone. In this regard, in some embodiments, the first computing device 140 is configured to capture one or more location indicative features using a microphone.

Additionally, or alternatively, the one or more sensors comprises a connection detector. In this regard, in some embodiments, the first computing device 140 is configured to capture one or more location indicative features using a connection detector. Additionally, or alternatively, the one or more sensors comprises a gyroscope. In this regard, in some embodiments, the first computing device 140 is configured to capture one or more location indicative features using a gyroscope. Additionally, or alternatively, the one or more sensors comprises an accelerometer. In this regard, in some embodiments, the first computing device 140 is configured to capture one or more location indicative features using an accelerometer. Additionally, or alternatively, the one or more sensors comprises a magnetometer. In this regard, in some embodiments, the first computing device 140 is configured to capture one or more location indicative features using a magnetometer. In some embodiments, the first computing device 140 is configured to capture one or more location indicative features in response to identifying a location recognition trigger. In this regard, in some embodiments, a location recognition trigger is configured to cause one or more sensors of the first computing device 140 to capture one or more location indicative features.

In some embodiments, the first computing device 140 is configured to cause actuation of one or more lighting components of the first computing device 140 based on a location recognition trigger. In this regard, in some embodiments, the first computing device 140 is configured to cause actuation of one or more lighting components of the first computing device 140 in response to identifying a location recognition trigger. In some embodiments, causing actuation of one or more lighting components of the first computing device 140 comprises the first computing device 140 being configured to increase a screen brightness of the first computing device 140. Additionally, or alternatively, causing actuation of one or more lighting components of the first computing device 140 comprises the first computing device 140 being configured to turn on a flashlight and/or a camera flash of the first computing device 140.

In some embodiments, the first computing device 140 is configured to cause actuation of the one or more lighting components based on the location recognition trigger occurring before the capturing of the one or more location indicative features. In some embodiments, by causing actuation of the one or more lighting components based on the location recognition trigger before the capturing of the one or more location indicative features, the first computing device 140 is configured to improve a quality of the captured one or more location indicative features. For example, by turning on a camera flash of the first computing device 140, the first computing device 140 may be able to capture a higher quality image based location indicative feature (e.g., improve the image fidelity associated with an image based location indicative feature).

In some embodiments, the first computing device 140 is configured to cause actuation of one or more audio components of the first computing device 140 based on a location recognition trigger. In this regard, in some embodiments, the first computing device 140 is configured to cause actuation of one or more audio components of the first computing device 140 in response to identifying a location recognition trigger. In some embodiments, causing actuation of one or more audio components of the first computing device 140 comprises the first computing device 140 being configured to increase a microphone sensitivity of the first computing device 140. Additionally, or alternatively, causing actuation of one or more audio components of the first computing device 140 comprises the first computing device 140 being configured to increase a speaker output volume of the first computing device 140. Additionally, or alternatively, causing actuation of one or more audio components of the first computing device 140 comprises the first computing device 140 being configured to output an audio alert that indicates that the first computing device 140 will be capturing one or more location indicative features.

In some embodiments, the first computing device 140 is configured to cause actuation of the one or more audio components based on the location recognition trigger occurring before the capturing of the one or more location indicative features. In some embodiments, by causing actuation of the one or more audio components based on the location recognition trigger before the capturing of the one or more location indicative features, the first computing device 140 is configured to improve a quality of the captured one or more location indicative features. For example, by increasing a microphone sensitivity of the first computing device 140, the first computing device 140 may be able to capture a higher quality audio based location indicative feature (e.g., improve the audio clarity associated with an audio based location indicative feature).

Additionally, or alternatively, causing actuation of the one or more audio components based on the location recognition trigger before the capturing of the one or more location indicative features, the first computing device 140 is configured to inform individuals in proximity to the first computing device 140 that the first computing device 140 will be capturing one or more location indicative features. For example, by outputting an audio alert that indicates that the first computing device 140 will be capturing one or more location indicative features, the first computing device 140 is configured to inform individuals in proximity to the first computing device 140 that the first computing device 140 will be capturing one or more location indicative features. In some embodiments, the first computing device 140 is configured to output an audio alert that indicates that the first computing device 140 will be capturing one or more location indicative features at least a predetermined amount of time before capturing one or more location indicative features. In this way, for example, the first computing device 140 may be configured to enable individuals to avoid being associated with the one or more location indicative features if desired by the individuals.

In some embodiments, the first computing device 140 is configured to determine an orientation of the first computing device 140. In some embodiments, the first computing device 140 is configured to determine an orientation of the first computing device 140 in response to identifying a location recognition trigger. For example, the first computing device 140 may configured to determine if the first computing device 140 is laying on a flat surface (e.g., the first computing device 140 is oriented at 0 degrees). As another example, the first computing device 140 may be configured to determine if the first computing device 140 is propped against a wall (e.g., the first computing device 140 is oriented at 90 degrees). As another example, the first computing device 140 may be configured to determine if the first computing device 140 is positioned at an unsteady angle (e.g., the first computing device 140 is oriented at an acute angle, such as 30 degrees). In some embodiments, for example, if the first computing device 140 is positioned at an unsteady angle, the first computing device 140 may be located in a prohibited area of the asset 110 (e.g., in a waste disposal area of the asset 110).

In some embodiments, the first computing device 140 is configured to determine a charge status of the first computing device 140. In some embodiments, the first computing device 140 is configured to determine a charge status of the first computing device 140 in response to identifying location recognition trigger. For example, the first computing device 140 may be configured to determine whether the first computing device 140 is being charged (e.g., whether the first computing device 140 is plugged into an electrical outlet). As another example, the first computing device 140 may be configured to determine a battery level of the first computing device 140.

In some embodiments, the first computing device 140 is configured to generate a location recognition result. In some embodiments, a location recognition result comprises one or more items of data representative and/or indicative of a description of a location in which the first computing device 140 is located that is generated using at least one of the one or more location indicative features and a location determination model. Additionally, or alternatively, a location recognition result comprises one or more items of data representative and/or indicative of a description of a location in which the first computing device 140 is located that is generated using an orientation of the first computing device 140 and/or a charge status of the first computing device 140.

In some embodiments, the location recognition result is in a natural language format. For example, the location recognition result may comprise one or more items of data representative and/or indicative of one or more of "the first computing device 140 is currently sitting upright in a charger connected to Wi-Fi network 'Warehouse001'", "the first computing device 140 is in a small, quiet, and dimly lit room", "the first computing device 140 can see a row of lockers and a whiteboard with the words 'Holiday Pot Luck Sign up' written on it", "there is one Bluetooth device nearby named 'Person A's smartphone'", and/or the like. In this regard, the first computing device 140 is configured to, using the location determination model, generate location recognition result by synthesizing one or more of the one or more location indicative features into a cohesive narrative that describes the location of the first computing device 140.

In some embodiments, the location determination model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to generate a location recognition result. In this regard, in some embodiments, the location determination model may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques. For example, the location determination model may be a large language model, such as a multimodal large language model, which is configured to generate a location recognition result using one or more location indicative features.

In some embodiments, the first computing device 140 is configured to initiate performance of one or more location related responsive actions. In some embodiments, the first computing device 140 is configured to initiate performance of one or more location related responsive actions based on a location recognition result. In this regard, in some embodiments, initiating performance of one or more location related responsive actions comprises the first computing device 140 being configured to generate a location recognition result interface component 302. In some embodiments, the location recognition result interface component 302 comprises a location recognition result representation 304 corresponding to the location recognition result. In some embodiments, the location recognition result interface component 302 comprises one or more of text, images, or visual elements that is indicative of a location recognition result (e.g., "the first computing device 140 is in a small, quiet, and dimly lit room"). Additionally, or alternatively, the location recognition result interface component 302 comprises a location indicative feature representation 306 corresponding to a location indicative feature. In some embodiments, the location indicative feature representation 306 comprises one or more of text, images, or visual elements that is indicative of a location indicative feature (e.g., text that indicates a device based location indicative feature).

In some embodiments, initiating performance of one or more location related responsive actions comprises the first computing device 140 being configured to cause the location recognition result interface component 302 to be rendered to an interface 300. In some embodiments, the interface 300 is provided on the first computing device 140, the second computing device 120, the third computing device 170, the user device 160, and/or one or more other computing devices.

In some embodiments, initiating performance of one or more location related responsive actions comprises the first computing device 140 being configured to transmit a location recognition result to the third computing device 170. Additionally, or alternatively, the initiating performance of one or more location related responsive actions comprises the first computing device 140 being configured to transmit a location recognition result to the second computing device 120, the user device 160, and/or one or more other computing devices. In some embodiments, a location recognition result may be transmitted to the first computing device 140, the second computing device 120, the third computing device 170, the user device 160, and/or one or more other computing devices in real-time.

In some embodiments, initiating performance of one or more location related responsive actions comprises the first computing device 140 being configured to cause actuation of one or more lighting components of the first computing device 140 based on a location recognition result. In this regard, in some embodiments, the first computing device 140 is configured to cause actuation of one or more lighting components of the first computing device 140 in response to generating a location recognition result. In some embodiments, causing actuation of one or more lighting components of the first computing device 140 comprises the first computing device 140 being configured to turn on a flashlight of the first computing device 140. In this way, for example, it may be easier for an individual to find the first computing device 140.

In some embodiments, initiating performance of one or more location related responsive actions comprises the first computing device 140 being configured to cause actuation of one or more audio components of the first computing device 140 based on a location recognition result. In this regard, in some embodiments, the first computing device 140 is configured to cause actuation of one or more audio components of the first computing device 140 in response to generating a location recognition result. In some embodiments, causing actuation of one or more audio components of the first computing device 140 comprises the first computing device 140 being configured to output an audio alert. In this way, for example, it may be easier for an individual to find the first computing device 140.

In some embodiments, initiating performance of one or more location related responsive actions comprises the first computing device 140 being configured to generate an asset location map using a location recognition result and/or asset mapping data. In some embodiments, an asset location map comprises a representation of a location of the first computing device 140 within the asset 110. In some embodiments, asset mapping data comprises one or more items of data representative and/or indicative of a physical layout of the asset 110. In this regard, for example, by generating an asset location map, the first computing device 140 is configured to provide a location of the first computing device 140 in reference to the physical layout of the asset 110.

### Example Methods

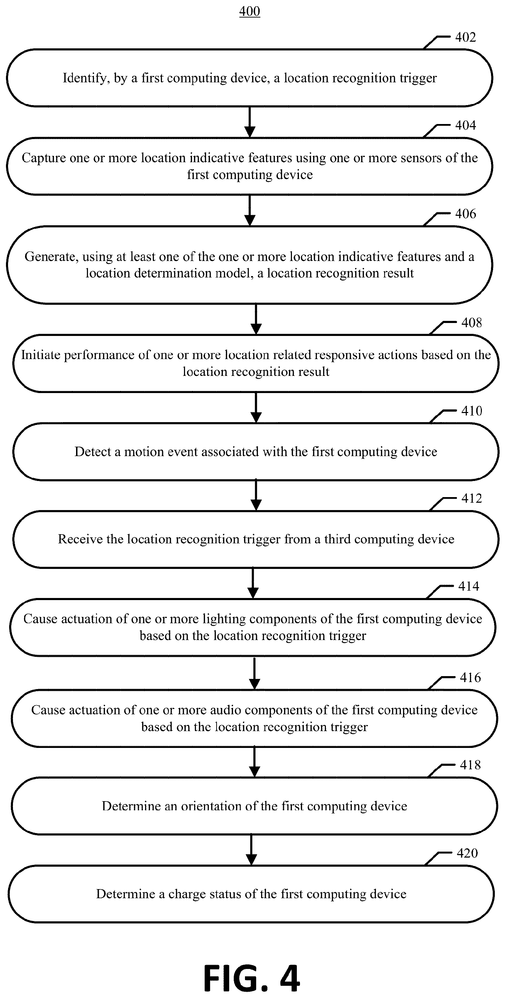

Referring now to FIG. 4, a flowchart providing an example method 400 is illustrated. In this regard, FIG. 4 illustrates operations that may be performed by the second computing device 120, the third computing device 170, the first computing device 140, the user device 160, and/or the database 150. In some embodiments, the method 400 includes operations for generating a location determination result. In some embodiments, the example method 400 defines a process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 400.

As shown in block 402, the method 400 includes, by a first computing device, a location recognition trigger. As described above, in some embodiments, the location recognition trigger is a trigger that causes the first computing device 140 to capture one or more location indicative features. In this regard, in some embodiments, identifying a location recognition trigger comprises the first computing device 140 being configured to determine that the current time is a predefined time in which the first computing device 140 should identify a location recognition trigger in accordance with a location recognition trigger schedule (e.g., the first computing device 140 is configured to periodically identify a location recognition trigger). Additionally, or alternatively, identifying a location recognition trigger comprises the first computing device 140 being configured to determine that a predefined amount of time has elapsed since the first computing device 140 was last accessed (e.g., a predefined amount of time has elapsed since the first computing device 140 was unlocked).

As shown in block 404, the method 400 includes in response to identifying the location recognition trigger, capturing one or more location indicative features using one or more sensors of the first computing device. As described above, in some embodiments, a location indicative feature comprises one or more items of data representative and/or indicative of a feature associated with the location of the first computing device 140.

In some embodiments, the one or more location indicative features comprises an image based location indicative feature. In some embodiments, an image based location indicative feature comprises one or more items of data representative and/or indicative of a feature associated with the location of the first computing device 140 as indicated by one or more images captured by the first computing device 140 (e.g., using a camera). In this regard, in some embodiments, an image based location indicative feature may comprise one or more items of data representative and/or indicative of a size of a room in which the first computing device 140 is located as indicated by an image captured by the first computing device 140.

In some embodiments, an image based location indicative feature may comprise one or more items of data representative and/or indicative of a light intensity in a location in which the first computing device 140 is located as indicated by an image captured by the first computing device 140. In this regard, for example, the light intensity may be measured in lumens. In some embodiments, an image based location indicative feature may comprise one or more items of data representative and/or indicative of an object in proximity to a location of the first computing device 140 as indicated by an image captured by the first computing device 140. In this regard, for example, an object may be any item that may be used to identify a location, such as a locker, a whiteboard, a printer, a sign, a conveyor belt, and/or the like (e.g., an object may be located in a known location which may be used as a reference to identify a location of the first computing device 140). In some embodiments, an image based location indicative feature may comprise one or more items of data representative and/or indicative of text located in proximity to a location of the first computing device 140 as indicated by an image captured by the first computing device 140. In this regard, for example, the text may be any text that may be used to identify a location (e.g., text that states "this is Operations Area A").

In some embodiments, the one or more location indicative features comprises an audio based location indicative feature. In some embodiments, an audio based location indicative feature comprises one or more items of data representative and/or indicative of a feature associated with the location of the first computing device 140 as indicated by audio captured by the first computing device 140 (e.g., using a microphone). In this regard, for example, an audio based location indicative feature may comprise one or more items of data representative and/or indicative of a size of a room in which the first computing device 140 is located as indicated by audio captured by the first computing device 140. In this regard, for example, the first computing device 140 may be configured to determine a size of a room in which the first computing device 140 is located by determining the amount of time it takes for audio emitted by the first computing device 140 (e.g., using a speaker) to be reflected back to the first computing device 140 (e.g., when a microphone captures the reflected back audio).

In some embodiments, an audio based location indicative feature may comprise one or more items of data representative and/or indicative of a noise level in a location in which the first computing device 140 is located as indicated by audio captured by the first computing device 140. In some embodiments, the noise level is be measured in decibels. In some embodiments, an audio based location indicative feature may comprise one or more items of data representative and/or indicative of an object in proximity to a location of the first computing device 140 as indicated by audio captured by the first computing device 140. In this regard, for example, the first computing device 140 may be configured to compare captured audio indicative of sounds made by known objects (e.g., compare captured audio with the known sounds, such as sounds made by a printer, a conveyor belt, individuals, and/or the like).

In some embodiments, an audio based location indicative feature may comprise one or more items of data representative and/or indicative of a number of audio sources in a location in which the first computing device 140 is located as indicated by audio captured by the first computing device 140. In this regard, for example, the first computing device 140 may be configured to determine the number of audio sources in a location in which the first computing device 140 is located by determining a number of different sounds (e.g., sounds that are differentiated by different frequencies, amplitudes, cadences, etc.) in a location in which the first computing device 140 is located.

In some embodiments, the one or more location indicative features comprises a device based location indicative feature. In some embodiments, a device based location indicative feature corresponds to the second computing device 120. In some embodiments, a device based location indicative feature comprises one or more items of data representative and/or indicative of a feature associated with the location of the first computing device 140 as indicated by information associated with the second computing device 120 that is captured by the first computing device 140 (e.g., using a connection detector). In this regard, in some embodiments, a device based location indicative feature may comprise one or more items of data representative and/or indicative of a name of the second computing device 120 (e.g., person A's computing device).

In some embodiments, a device based location indicative feature may comprise one or more items of data representative and/or indicative of a type of the second computing device 120 (e.g., the second computing device 120 is a smartphone). In some embodiments, a device based location indicative feature may comprise one or more items of data representative and/or indicative of a distance to the second computing device 120 from the first computing device 140 (e.g., the second computing device 120 is twenty feet away from the first computing device 140). In some embodiments, a device based location indicative feature may comprise one or more items of data representative and/or indicative of a Wi-Fi network that the second computing device 120 is connected to. In this regard, for example, the first computing device 140 may be configured to determine if the first computing device 140 is connected to the same Wi-Fi network as the second computing device 120, such as a Wi-Fi network of the asset 110.

In some embodiments, the first computing device 140 is configured to capture one or more location indicative features using one or more sensors. For example, the first computing device 140 is configured to capture one or more location indicative features using one or more sensors of the first computing device 140 (e.g., onboard sensors of the first computing device 140). In some embodiments, the one or more sensors comprises a camera. In this regard, in some embodiments, the first computing device 140 is configured to capture one or more location indicative features using a camera. Additionally, or alternatively, the one or more sensors comprises a microphone. In this regard, in some embodiments, the first computing device 140 is configured to capture one or more location indicative features using a microphone.

Additionally, or alternatively, the one or more sensors comprises a connection detector. In this regard, in some embodiments, the first computing device 140 is configured to capture one or more location indicative features using a connection detector. Additionally, or alternatively, the one or more sensors comprises a gyroscope. In this regard, in some embodiments, the first computing device 140 is configured to capture one or more location indicative features using a gyroscope. Additionally, or alternatively, the one or more sensors comprises an accelerometer. In this regard, in some embodiments, the first computing device 140 is configured to capture one or more location indicative features using an accelerometer. Additionally, or alternatively, the one or more sensors comprises a magnetometer. In this regard, in some embodiments, the first computing device 140 is configured to capture one or more location indicative features using a magnetometer. In some embodiments, the first computing device 140 is configured to capture one or more location indicative features in response to identifying a location recognition trigger. In this regard, in some embodiments, a location recognition trigger is configured to cause one or more sensors of the first computing device 140 to capture one or more location indicative features.

As shown in block 406, the method 400 includes generating, using at least one of the one or more location indicative features and a location determination model, a location recognition result. As described above, in some embodiments, a location recognition result comprises one or more items of data representative and/or indicative of a description of a location in which the first computing device 140 is located that is generated using at least one of the one or more location indicative features and a location determination model. Additionally, or alternatively, a location recognition result comprises one or more items of data representative and/or indicative of a description of a location in which the first computing device 140 is located that is generated using an orientation of the first computing device 140 and/or a charge status of the first computing device 140.

In some embodiments, the location recognition result is in a natural language format. For example, the location recognition result may comprise one or more items of data representative and/or indicative of one or more of "the first computing device 140 is currently sitting upright in a charger connected to Wi-Fi network 'Warehouse001'", "the first computing device 140 is in a small, quiet, and dimly lit room", "the first computing device 140 can see a row of lockers and a whiteboard with the words 'Holiday Pot Luck Sign up' written on it", "there is one Bluetooth device nearby named 'Person A's smartphone'", and/or the like. In this regard, the first computing device 140 is configured to, using the location determination model, generate location recognition result by synthesizing one or more of the one or more location indicative features into a cohesive narrative that describes the location of the first computing device 140.

In some embodiments, the location determination model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to generate a location recognition result. In this regard, in some embodiments, the location determination model may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques. For example, the location determination model may be a large language model, such as a multimodal large language model, which is configured to generate a location recognition result using one or more location indicative features.

As shown in block 408, the method 400 includes initiating performance of one or more location related responsive actions based on the location recognition result. As described above, in some embodiments, one or more location related responsive actions may be initiated in response to generation of a location recognition result.

As shown in block 410, the method 400 includes detecting a motion event associated with the first computing device. As described above, in some embodiments, identifying a location recognition trigger comprises the first computing device 140 being configured to detect a motion event. In some embodiments, a motion event is an event in which the first computing device 140 detects that the first computing device 140 accelerates at a rate that meets or exceeds an acceleration threshold (e.g., the first computing device 140 accelerates faster than a predefined acceleration rate). In some embodiments, a motion event is an event in which the first computing device 140 moves at a rate of speed that is greater than a speed threshold (e.g., the first computing device 140 travels faster than a predefined speed rate). In some embodiments, a motion event is an event in which the first computing device 140 is moved such that the first computing device 140 is located outside of the asset 110, in a prohibited area of the asset 110 (e.g., in a waste disposal area of the asset 110), and/or the like. In some embodiments, the first computing device 140 is configured to detect a motion event using one or more sensors, such as one or more sensors that comprise a gyroscope, accelerometer, magnetometer, and/or the like.

As shown in block 412, the method 400 includes receiving the location recognition trigger from a third computing device. As described above, in some embodiments, identifying a location recognition trigger comprises the first computing device 140 being configured to receive a location recognition trigger from the third computing device 170, the user device 160, and/or one or more other computing devices. For example, the first computing device 140 may be configured to receive a location recognition trigger from the third computing device 170, the user device 160, and/or one or more other computing devices in a natural language format (e.g., a trigger that states "describe your surroundings").

As shown in block 414, the method 400 includes causing actuation of one or more lighting components of the first computing device based on the location recognition trigger. As described above, in some embodiments, the first computing device 140 is configured to cause actuation of one or more lighting components of the first computing device 140 in response to identifying a location recognition trigger. In some embodiments, causing actuation of one or more lighting components of the first computing device 140 comprises the first computing device 140 being configured to increase a screen brightness of the first computing device 140. Additionally, or alternatively, causing actuation of one or more lighting components of the first computing device 140 comprises the first computing device 140 being configured to turn on a flashlight and/or a camera flash of the first computing device 140.

In some embodiments, the first computing device 140 is configured to cause actuation of the one or more lighting components based on the location recognition trigger occurring before the capturing of the one or more location indicative features. In some embodiments, by causing actuation of the one or more lighting components based on the location recognition trigger before the capturing of the one or more location indicative features, the first computing device 140 is configured to improve a quality of the captured one or more location indicative features. For example, by turning on a camera flash of the first computing device 140, the first computing device 140 may be able to capture a higher quality image based location indicative feature (e.g., improve the image fidelity associated with an image based location indicative feature).

As shown in block 416, the method 400 includes causing actuation of one or more audio components of the first computing device based on the location recognition trigger. As described above, in some embodiments, the first computing device 140 is configured to cause actuation of one or more audio components of the first computing device 140 in response to identifying a location recognition trigger. In some embodiments, causing actuation of one or more audio components of the first computing device 140 comprises the first computing device 140 being configured to increase a microphone sensitivity of the first computing device 140. Additionally, or alternatively, causing actuation of one or more audio components of the first computing device 140 comprises the first computing device 140 being configured to increase a speaker output volume of the first computing device 140. Additionally, or alternatively, causing actuation of one or more audio components of the first computing device 140 comprises the first computing device 140 being configured to output an audio alert that indicates that the first computing device 140 will be capturing one or more location indicative features.

In some embodiments, the first computing device 140 is configured to cause actuation of the one or more audio components based on the location recognition trigger occurring before the capturing of the one or more location indicative features. In some embodiments, by causing actuation of the one or more audio components based on the location recognition trigger before the capturing of the one or more location indicative features, the first computing device 140 is configured to improve a quality of the captured one or more location indicative features. For example, by increasing a microphone sensitivity of the first computing device 140, the first computing device 140 may be able to capture a higher quality audio based location indicative feature (e.g., improve the audio clarity associated with an audio based location indicative feature).

Additionally, or alternatively, causing actuation of the one or more audio components based on the location recognition trigger before the capturing of the one or more location indicative features, the first computing device 140 is configured to inform individuals in proximity to the first computing device 140 that the first computing device 140 will be capturing one or more location indicative features. For example, by outputting an audio alert that indicates that the first computing device 140 will be capturing one or more location indicative features, the first computing device 140 is configured to inform individuals in proximity to the first computing device 140 that the first computing device 140 will be capturing one or more location indicative features. In some embodiments, the first computing device 140 is configured to output an audio alert that indicates that the first computing device 140 will be capturing one or more location indicative features at least a predetermined amount of time before capturing one or more location indicative features. In this way, for example, the first computing device 140 may be configured to enable individuals to avoid being associated with the one or more location indicative features if desired by the individuals.

As shown in block 418, the method 400 includes in response to identifying the location recognition trigger, determining an orientation of the first computing device. As described above, in some embodiments, the first computing device 140 is configured to determine an orientation of the first computing device 140 in response to identifying a location recognition trigger. For example, the first computing device 140 may configured to determine if the first computing device 140 is laying on a flat surface (e.g., the first computing device 140 is oriented at 0 degrees). As another example, the first computing device 140 may be configured to determine if the first computing device 140 is propped against a wall (e.g., the first computing device 140 is oriented at 90 degrees). As another example, the first computing device 140 may be configured to determine if the first computing device 140 is positioned at an unsteady angle (e.g., the first computing device 140 is oriented at an acute angle, such as 30 degrees). In some embodiments, for example, if the first computing device 140 is positioned at an unsteady angle, the first computing device 140 may be located in a prohibited area of the asset 110 (e.g., in a waste disposal area of the asset 110).

As shown in block 420, the method 400 includes in response identifying the location recognition trigger, determining a charge status of the first computing device. As described above, in some embodiments, the first computing device 140 is configured to determine a charge status of the first computing device 140 in response to identifying location recognition trigger. For example, the first computing device 140 may be configured to determine whether the first computing device 140 is being charged (e.g., whether the first computing device 140 is plugged into an electrical outlet). As another example, the first computing device 140 may be configured to determine a battery level of the first computing device 140.

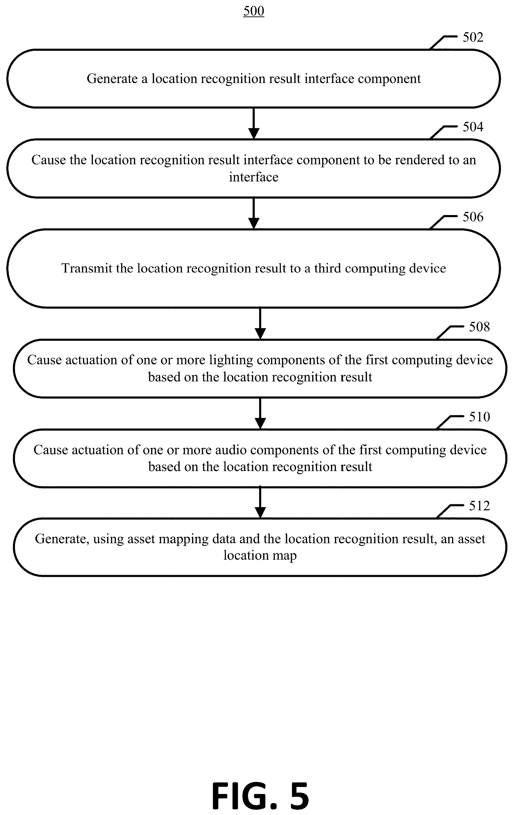

Referring now to FIG. 5, a flowchart providing an example method 500 is illustrated. In this regard, FIG. 5 illustrates operations that may be performed by the second computing device 120, the third computing device 170, the first computing device 140, the user device 160, and/or the database 150. In some embodiments, the method 500 includes operations for initiating performance of one or more location related responsive actions. In some embodiments, the example method 500 defines a process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 500.

As shown in block 502, the method 500 includes generating a location recognition result interface component. As described above, in some embodiments, the location recognition result interface component 302 comprises a location recognition result representation 304 corresponding to the location recognition result. In some embodiments, the location recognition result interface component 302 comprises one or more of text, images, or visual elements that is indicative of a location recognition result (e.g., "the first computing device 140 is in a small, quiet, and dimly lit room"). Additionally, or alternatively, the location recognition result interface component 302 comprises a location indicative feature representation 306 corresponding to a location indicative feature. In some embodiments, the location indicative feature representation 306 comprises one or more of text, images, or visual elements that is indicative of a location indicative feature (e.g., text that indicates a device based location indicative feature).

As shown in block 502, the method 500 includes causing the location recognition result interface component to be rendered to an interface. As described above, in some embodiments, the interface 300 is provided on the first computing device 140, the second computing device 120, the third computing device 170, the user device 160, and/or one or more other computing devices.

As shown in block 502, the method 500 includes transmitting the location recognition result to a third computing device. As described above, additionally, or alternatively, the initiating performance of one or more location related responsive actions comprises the first computing device 140 being configured to transmit a location recognition result to the second computing device 120, the user device 160, and/or one or more other computing devices. In some embodiments, a location recognition result may be transmitted to the first computing device 140, the second computing device 120, the third computing device 170, the user device 160, and/or one or more other computing devices in real-time.

As shown in block 502, the method 500 includes causing actuation of one or more lighting components of the first computing device based on the location recognition result. As described above, in some embodiments, the first computing device 140 is configured to cause actuation of one or more lighting components of the first computing device 140 in response to generating a location recognition result. In some embodiments, causing actuation of one or more lighting components of the first computing device 140 comprises the first computing device 140 being configured to turn on a flashlight of the first computing device 140. In this way, for example, it may be easier for an individual to find the first computing device 140.

As shown in block 502, the method 500 includes causing actuation of one or more audio components of the first computing device based on the location recognition result. As described above, in some embodiments, the first computing device 140 is configured to cause actuation of one or more audio components of the first computing device 140 in response to generating a location recognition result. In some embodiments, causing actuation of one or more audio components of the first computing device 140 comprises the first computing device 140 being configured to output an audio alert. In this way, for example, it may be easier for an individual to find the first computing device 140.

As shown in block 502, the method 500 includes generating, using asset mapping data and the location recognition result, an asset location map. As described above, in some embodiments, an asset location map comprises a representation of a location of the first computing device 140 within the asset 110. In some embodiments, asset mapping data comprises one or more items of data representative and/or indicative of a physical layout of the asset 110. In this regard, for example, by generating an asset location map, the first computing device 140 is configured to provide a location of the first computing device 140 in reference to the physical layout of the asset 110.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:
identifying, by a first computing device, a location recognition trigger;
in response to identifying the location recognition trigger, capturing one or more location indicative features using one or more sensors of the first computing device, wherein the one or more location indicative features comprise an image based location indicative feature, an audio based location indicative feature, and a device based location indicative feature corresponding to a second computing device;
generating, using at least one of the one or more location indicative features and a location determination model, a location recognition result; and
initiating performance of one or more location related responsive actions based on the location recognition result.

2. The method of claim 1, wherein identifying the location recognition trigger comprises:
detecting a motion event associated with the first computing device.

3. The method of claim 1, wherein identifying the location recognition trigger comprises:
receiving the location recognition trigger from a third computing device.

4. The method of claim 1, wherein the second computing device is less than a predefined distance from the first computing device.

5. The method of claim 4, wherein the predefined distance is based on a Bluetooth range associated with the first computing device.

6. The method of claim 1, wherein the first computing device and the second computing device are located in an asset, wherein the first computing device is connected to a Wi-Fi network of the asset.

7. The method of claim 1, further comprising:
causing actuation of one or more lighting components of the first computing device based on the location recognition trigger.

8. The method of claim 7, wherein causing actuation of the one or more lighting components based on the location recognition trigger occurs before the capturing of the one or more location indicative features.

9. The method of claim 1, further comprising:
causing actuation of one or more audio components of the first computing device based on the location recognition trigger.

10. The method of claim 9, wherein causing actuation of the one or more audio components based on the location recognition trigger occurs before the capturing of the one or more location indicative features.

11. The method of claim 1, further comprising:
in response to identifying the location recognition trigger, determining an orientation of the first computing device.

12. The method of claim 1, further comprising:
in response identifying the location recognition trigger, determining a charge status of the first computing device.

13. The method of claim 1, wherein initiating performance of the one or more location related responsive actions comprises:
generating a location recognition result interface component, wherein the location recognition result interface component comprises a location recognition result representation corresponding to the location recognition result; and
causing the location recognition result interface component to be rendered to an interface.

14. An apparatus comprising memory and one or more processors communicatively coupled to the memory, the one or more processors configured to perform operations comprising:
identifying, by a first computing device, a location recognition trigger;
in response to identifying the location recognition trigger, capturing one or more location indicative features using one or more sensors of the first computing device, wherein the one or more location indicative features comprise an image based location indicative feature, an audio based location indicative feature, and a device based location indicative feature corresponding to a second computing device;
generating, using at least one of the one or more location indicative features and a location determination model, a location recognition result; and
initiating performance of one or more location related responsive actions based on the location recognition result.

15. A computer program product comprising at least one non-transitory computer-readable storage medium having computer program code stored thereon that, in execution with one or more processors, configures the computer program product for:
identifying, by a first computing device, a location recognition trigger;
in response to identifying the location recognition trigger, capturing one or more location indicative features using one or more sensors of the first computing device, wherein the one or more location indicative features comprise an image based location indicative feature, an audio based location indicative feature, and a device based location indicative feature corresponding to a second computing device;
generating, using at least one of the one or more location indicative features and a location determination model, a location recognition result; and
initiating performance of one or more location related responsive actions based on the location recognition result.
